# EUROPEAN PATENT SPECIFICATION

(11) **EP 2 068 682 B1**
(45) Date of publication and mention of the grant of the patent: **22.12.2010**
(21) Application number: 07826437.1
(22) Date of filing: 19.09.2007
(51) Int. Cl.: A47J 27/212

(54) **HOT WATER KETTLE COMPRISING AN ACOUSTIC MEMBER FOR GENERATING AN ACOUSTIC SIGNAL**
HEISSWASSERKESSEL MIT EINEM AKUSTISCHEN ELEMENT ZUR ERZEUGUNG EINES AKUSTISCHEN SIGNALS
BOUILLOIRE D'EAU CHAUDE COMPORTANT UN ÉLÉMENT ACOUSTIQUE POUR GÉNÉRER UN SIGNAL ACOUSTIQUE

(30) Priority: 25.09.2006 EP 06121169
(43) Date of publication of application: 17.06.2009
(73) Proprietor: Koninklijke Philips Electronics N.V., 5621 BA Eindhoven (NL)
(72) Inventor: VREIJSEN, Petrus J., N., B., NL-5656 AE Eindhoven (NL)
(74) Representative: Uittenbogaard, Frank
(86) International application number: PCT/IB2007/053779
(87) International publication number: WO 2008/038185

(56) References cited:
- DE-A1- 2 911 230
- DE-U1- 9 411 561
- GB-A- 2 221 795
- GB-A- 2 313 482
- GB-A- 2 325 395

## Description

### FIELD OF THE INVENTION

The present invention relates to a device for performing a process and for indicating having reached a specified stage of the process, more specifically to a device for heating a fluid and for indicating a stage of the fluid heating process at which the fluid is boiling, comprising an acoustic member for generating an acoustic signal.

### BACKGROUND OF THE INVENTION

A device as mentioned in the opening paragraph is well-known in practice. For example, the device may be an electric hot water kettle which comprises a container for containing water, a heating element for heating water which is present inside the container, and an electric circuit, wherein the heating element is powered by the electric circuit. Furthermore, the hot water kettle comprises an on/off switch, which is arranged in the electric circuit, and which serves for closing the electric circuit when the heating element needs to be operated, and for interrupting the electric circuit when there is no need for a supply of heat. The on/off switch is manually operable by means of a button element, and is adapted to function as a safety switch, i.e. a switch which automatically switches to an opened position for interrupting the electric circuit when a temperature at a measuring point exceeds a certain threshold.

When a user decides to apply the hot water kettle for the purpose of boiling water, the following actions take place:
- the user checks the water level in the container, and adds water if necessary;
- the user puts the on/off switch to a closed position for closing the electric circuit, as a result of which the heating element is activated and the water which is present inside the container is heated to the boiling point; and
- the on/off switch automatically switches back to an opened position for interrupting the electric circuit when the water has been boiling for a certain period of time, as a result of which the heating element is deactivated and the heating process is terminated.

For the purpose of warning the user that the water is ready and that the hot water kettle is in an inoperative state again, the kettle comprises an acoustic member, which is activated when the on/off switch switches back to the opened position. According to a well-known option, the acoustic member comprises a cymbal, i.e. a metal dish, and an element for striking the cymbal.

In the field of domestic appliances, there is a need for relatively small kettles. These kettles may be so small that it is very difficult to incorporate a cymbal and an element for striking the cymbal, or any other known embodiment of an acoustic member for generating an acoustic signal. According to the state of the art, a solution is found in making a handle of the kettle, which is adapted to be taken hold of by a user of the kettle, wide enough for accommodating the acoustic member.

### SUMMARY OF THE INVENTION

It is an objective of the present invention to provide a solution according to which it is possible to have an acoustic member for generating an acoustic signal in a relatively small kettle, wherein it is not required to enlarge a handle or another component of the kettle in order to create enough space for accommodating the acoustic member. This objective is achieved by providing a device with an acoustic member which comprises a resonance box and a vibratory member which is capable of generating an acoustic vibration and thereby causing the resonance box to resonate, as in such case, the resonance box may be constituted by a component of the device which is present in the device anyway. For example, the resonance box may be constituted by a button element which primarily serves for operating an on/off switch of the device, or may be part of a handle of the device.

In general, a resonance box is a hollow chamber which uses an effect known as resonance to amplify an acoustic vibration, wherein it is noted that acoustic vibration is also referred to as sound. The chamber has interior surfaces for reflecting an acoustic wave. When such a wave enters the chamber, it bounces back and forth within the chamber with low loss, as a result of which a standing wave is obtained. As more wave energy enters the chamber, it combines with and reinforces the standing wave, increasing its intensity (volume). Hence, in short, resonance may be described as an intensification and prolongation of sound, produced by sympathetic vibration. It is noted that combinations of a vibratory member and a resonance box are known per se, and that therefore, the functioning of such a combination will not be further elucidated here.

The present invention allows for incorporating an acoustic member for generating an acoustic signal in a hot water kettle or the like while only requiring a minimum of space. In comparison with a known kettle having a cymbal and an element for striking the cymbal, the cymbal may be omitted, and an existing component of the kettle may be applied as a resonance box. This component may even be chosen such that there is no need to modify the design of the component. For example, an otherwise wasted space of a handle of the kettle may serve as a resonance space.

The above-described advantage of space-saving is obtained when the resonance box is formed by a component of the kettle which has at least one other function than being part of the acoustic member. A general advantage of applying a combination of a resonance box and a vibratory member over a combination of a cymbal and an element for striking the cymbal is that it is possible to obtain a louder and longer lasting acoustic signal.

Preferably, the vibratory member is arranged inside the resonance box. The vibratory member comprises a flexible bar, which may be made of metal.

The device according to the present invention comprises an actuator which is adapted to retain the vibratory member when being in a first position with respect to the vibratory member, and to release the vibratory member when moving from the first position to a second position with respect to the vibratory member, whereby the vibratory member is caused to vibrate. An engagement between the actuator and the vibratory member is easily established or released when the actuator comprises a hook-shaped portion for engaging a portion of the vibratory member when the actuator is in the first position with respect to the vibratory member.

The actuator does not necessarily need to be a separate element, as it is possible that the actuator is constituted by a button element which primarily serves for operating an on/off switch of the device. In such case, it is ensured that when the position of the on/off switch is changed, a status of the engagement between the actuator and the vibratory member is changed as well. Thus, it is possible to have an arrangement in which the engagement between the actuator and the vibratory member is established when the on/off switch is put to the closed position, and in which this engagement is released when the on/off switch switches to the opened position, wherein vibration of the vibratory member and resonance of the resonance box are obtained.

In another embodiment of the device according to the present invention, the vibratory member is connected to a button element which primarily serves for operating an on/off switch of the device. In that case, it is also possible to realize vibration of the vibratory member and resonance of the resonance box every time the on/off switch switches from the closed position to the opened position.

According to yet another option existing within the scope of the present invention, an actuator for retaining and releasing the vibratory member may comprise an electromagnet. An important advantage of applying such an actuator is that only very little space is needed for the actuator.

In case the vibratory member comprises a flexible bar, for example, it is advantageous if the vibratory member is fixedly connected at one end, wherein another end may be used for engagement to a component such as an actuator and release from that component.

The device according to the present invention may be a hot water kettle, but may also be any other device for heating a fluid and for indicating a stage of the process at which the fluid is boiling, within the scope as defined by the claims, including kitchen appliances such as coffee makers, fryers or the like, which serve for heating a fluid.

The above-described and other aspects of the present invention will be apparent from and elucidated with reference to the following description of a hot water kettle and two embodiments of components of the kettle involved in generating an acoustic signal for indicating a ready status of water which is boiled by means of the kettle.

It is to be noted that the German Gebrauchsmunster DE 94 11 561 U1 discloses an electrical water kettle which indicates the end of the heating process by an acoustic signal. This acoustic signal is generated when a part of the on/off switch hits a sound producing element, e.g. a bell, as a result of moving from the on-position to the off-position.

It is further to be noted that UK patent application GB 2 313 482 A discloses an electrical water kettle which rings a bell when the water boils. The bell is struck by an arm which is brought in a first position by pushing the on/off switch when the kettle is switched on and released when the water boils. On release the arm starts moving and strikes the bell, causing the bell to sound.

It is further to be noted that German Offenlegungsschrift DE 29 11 230 A1 discloses a switch-off device for coffee and tea machines which acoustically indicates when it switches off. The switch-off device involves an arm which hits a bell or singing bowl when the switch-off device switches off.

It is further to be noted that UK patent application GB 2 325 395 A discloses a domestic kettle alarm. This kettle alarm is activated electronically when the kettle switches off when the boiling point has been reached. The kettle alarm is disclosed as having an electrical circuit.

### BRIEF DESCRIPTION OF THE DRAWINGS

The present invention will now be explained in greater detail with reference to the figures, in which equal or similar parts are indicated by the same reference signs, and in which:
Fig. 1 diagrammatically shows a hot water kettle;
Fig. 2 diagrammatically shows a perspective view of a button element for operating an on/off switch of the hot water kettle;
Figs. 3 and 4 diagrammatically show a cross-section of a first advantageous embodiment of components of the kettle involved in generating an acoustic signal for indicating a ready status of water which is boiled by means of the kettle, in a first mutual position and a second mutual position, respectively; and
Figs. 5 and 6 diagrammatically show a cross-section of a second advantageous embodiment of components of the kettle involved in generating an acoustic signal for indicating a ready status of water which is boiled by means of the kettle, in a first mutual position and a second mutual position, respectively.

### DETAILED DESCRIPTION OF EMBODIMENTS

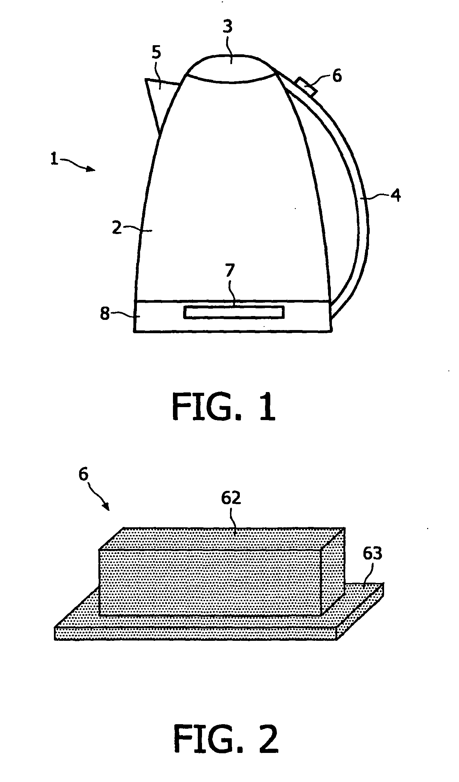

Figure 1 diagrammatically shows an electric hot water kettle 1, which is suitable to be used for boiling water. The hot water kettle 1 comprises a container 2 for containing water, which is closable by means of a hingably arranged lid 3, a handle 4 which is adapted to be taken hold of by a user of the kettle 1, and a water outlet part 5. Furthermore, the hot water kettle 1 comprises a button element 6 for enabling the user to operate an on/off switch (not shown) of the kettle 1, and an electric heating element 7 for supplying heat to water which is present inside the container 2. In the shown example, the heating element 7 is arranged in a bottom section 8 of the container 2. It is noted that the on/off switch is adapted to function as a safety switch, in a manner which is known per se, so that, during operation of the hot water kettle 1, the on/off switch switches to an opened position when a temperature at a measuring point exceeds a certain threshold. The button element 6 is movably arranged, wherein the position of the button element 6 and the position of the on/off switch are directly related.

The hot water kettle 1 as shown may comprise an electric cord and a plug for connecting an electric circuit (not shown) of the kettle 1 to the mains. However, it is also possible that the hot water kettle 1 is a so-called cordless kettle 1, wherein a base element (not shown) is provided for supporting the kettle 1, and wherein the base element comprises the electric cord and the plug. In such case, both the kettle 1 and the base element comprise connecting means for establishing an electric connection when the kettle 1 is put in place on the base element. An important advantage of the application of a separate base element is that the user of the kettle 1 is free to take the kettle 1 and to transport the kettle 1, without experiencing any hindrance of an electric cord.

In the following, the way in which the hot water kettle 1 is operated will be described. In the first place, the user of the kettle 1 checks the water level inside the container 2, and adds water if necessary, by putting the lid 3 to an opened position, letting water flow into the container 2, and putting the lid 3 to a closed position again. Subsequently, the user puts the button element 6 to a position for closing the on/off switch of the kettle 1. As a result, the electric circuit of the kettle 1 is closed, and the heating element 7 is operated such as to supply heat to the water which is present inside the container 2. At a certain point, the water starts to boil, and after a short period of time, the on/off switch switches to the opened position, as a result of which the electric circuit of the kettle 1 is interrupted, and the heating element 7 is deactivated. In the process, the position of the button element 6 is changed as well, due to the fact that the button element 6 is directly associated with the on/off switch.

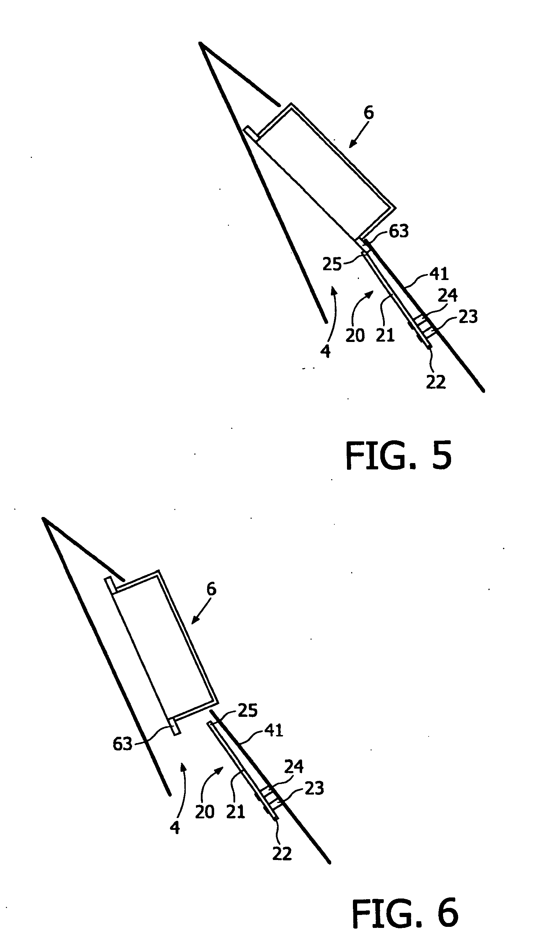

In the hot water kettle 1, measures are taken to realize that an acoustic signal is emitted when the on/off switch switches back to the opened position, so that the user may be informed that a boiling process has taken place, and that the water is ready for further use. Two variants of these measures will now be explained on the basis of figures 2-6, wherein figures 2-4 serve to illustrate a first variant, and wherein figures 5 and 6 serve to illustrate a second variant.

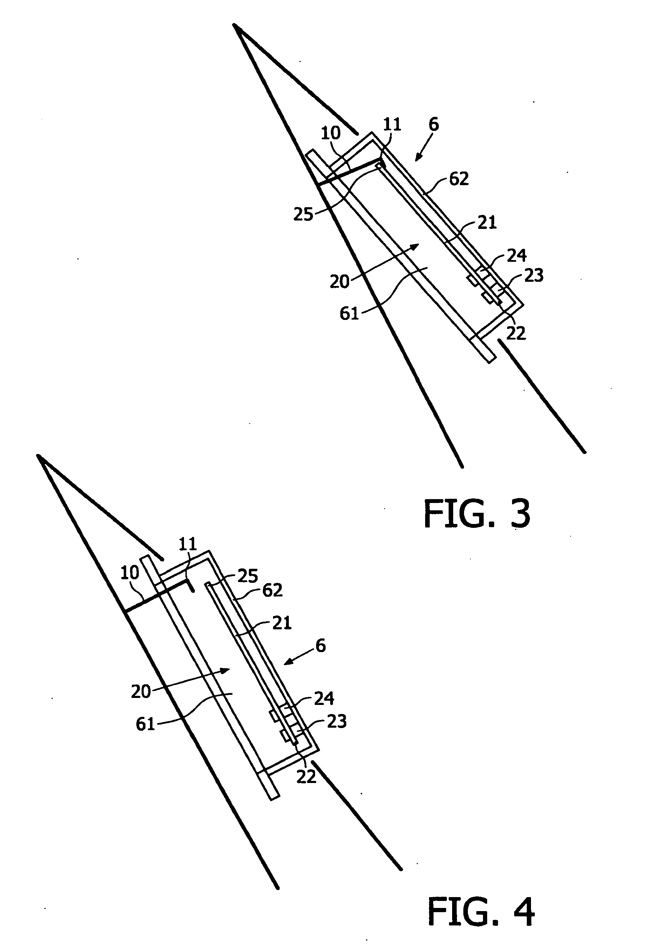

In figure 2, a perspective view of the button element 6 is diagrammatically shown. It is noted that one side of the button element 6 is open, and that the button element 6 is hollow and comprises a space 61, as can be seen in figures 3 and 4.

In figures 3 and 4, fixedly arranged components of the hot water kettle 1 are diagrammatically shown by means of relatively thick lines. One of these components is an actuator 10 having a hook-shaped end portion 11, the function of which will be explained later.

Inside the button element 6, a vibratory element 20 is arranged, which comprises a flexible bar 21, wherein one end 22 of the bar 21 is fixedly connected to an outer wall 62 of the button element 6, through connection elements 23, 24, and wherein another end 25 of the bar 21 is a free end. The bar 21 is arranged such as to extend substantially parallel to the outer wall 62 of the button element 6.

In the following, it will be explained how an acoustic signal is generated when the on/off switch of the hot water kettle 1 switches from the closed position to the opened position, which is the case when the water inside the container 2 has been boiling for a short period of time, as previously described.

Figure 3 shows the button element 6 in a position which corresponds to a closed position of the on/off switch, and figure 4 shows the button element 6 in a position which corresponds to an opened position of the on/off switch. Figure 4 shows that in the opened position of the on/off switch, i.e. in an off condition of the hot water kettle 1, there is no contact whatsoever between the actuator 10 and the vibratory element 20. However, when the user of the hot water kettle 1 puts the button element 6 in a position for closing the on/off switch and activating the heating element 7 of the kettle 1, the free end 25 of the flexible bar 21 of the vibratory element 20 is moved beyond the hook-shaped end portion 11 of the actuator 10, wherein a situation in which the end 25 of the bar 21 is retained by the actuator 10 is realized. This situation is illustrated by figure 3.

When the on/off switch switches back to the opened position again, the position of the button element 6 changes as well. In the process, the free end 25 of the bar 21 remains hooked for a while, so that a free portion of the bar 21 extending beyond the connection elements 23, 24 is bent a little, until the end 25 is eventually released. At that moment, the free portion of the bar 21 sways towards the outer wall 62 of the button element 60, and a vibration of the bar 21 is initiated, at a natural resonance frequency of the bar 21. The vibration of the bar 21 causes the button element 6 to resonate, wherein the space 61 of the button element 6 functions as a resonance space. In this way, an acoustic signal is obtained, which may be more than loud enough to be noticed by the user of the hot water kettle 1, as the button element 6 is arranged at the outside of the kettle 1, and which is relatively long lasting, as it is generated on the basis of a resonance effect. As the moment that the sound is emitted by the kettle 1 is the moment the on/off switch switches from the closed position to the opened position, the sound is suitable to be taken as a warning that the water has been boiling and that the kettle 1 is in the off condition again.

An alternative to the above-described arrangement will now be explained on the basis of figures 5 and 6, which diagrammatically show a portion of the handle 4 of the hot water kettle 1, in which the button element 6 and a vibratory element 20 are arranged. In this case, the vibratory element 20 is not arranged inside the button element 6, but the vibratory element 20 is connected to an outer wall 41 of the handle 4. Furthermore, in this case, there is no separate actuator 10. Instead, the button element 6 is used as an actuator, as will become apparent from the following explanation of the way in which an acoustic signal is generated when the on/off switch switches from a closed position to an opened position and the position of the button element 6 changes accordingly.

Figure 5 shows the button element 6 in a position which corresponds to a closed position of the on/off switch, and figure 6 shows the button element 6 in a position which corresponds to an opened position of the on/off switch. Figure 6 shows that in the opened position of the on/off switch, i.e. in an off condition of the hot water kettle 1, there is no contact whatsoever between the button element 6 and the vibratory element 20. However, when the user of the hot water kettle 1 puts the button element 6 in a position for closing the on/off switch and activating the heating element 7 of the kettle 1, a rim 63 of the button element 6 is moved beyond the free end 25 of the flexible bar 21 of the vibratory element 20, so that the rim 63 is positioned between the outer wall 41 of the handle 4 and the free end 25 of the bar 21. This situation is illustrated by figure 5.

When the on/off switch switches back to the opened position again, and the position of the button element 6 changes as well, the free end 25 of the bar 21 is pressed somewhat away from the outer wall 41 of the handle 4, so that a free portion of the bar 21 extending beyond the connection elements 23, 24 is bent a little, until the rim 63 of the button element 6 eventually moves beyond the free end 25 of the bar 21. At that moment, the free portion of the bar 21 sways towards the outer wall 41 of the handle 4, and a vibration of the bar 21 is initiated, at a natural resonance frequency of the bar 21. The vibration of the bar 21 causes the handle 4, or at least the portion shown in figures 5 and 6, to resonate, wherein the handle 4 functions as a resonance box. In this way, the acoustic signal is obtained.

It follows from the foregoing that, according to the present invention, components of a hot water kettle 1 having a certain function may also be used as a resonance box. Hence, there is no need for an additional resonator for generating an acoustic signal, so that space may be saved. This is an important advantage of the present invention, especially when the present invention is applied in the field of relatively small water kettles. Another advantage of the present invention follows from the fact that the acoustic signal is generated on the basis of a resonance effect, as a result of which the signal may be relatively loud and long lasting. This is particularly true when the component of the kettle 1 which is used as a resonance box is situated at the outside of the kettle 1.

For the purpose of generating an acoustic signal in order to warn a user that the water is ready, all that is needed is to provide a vibratory element 20, and to arrange this vibratory element 20 such that a vibration of the vibratory element 20 is caused when the on/off switch of the kettle 1 switches from a closed position to an opened position. For example, as previously explained, the vibratory element 20 may be operated by means of the button element 6 which is directly associated with the on/off switch, or by means of a suitable actuator 10 when the vibratory element 20 is connected to the button element 6. In either case, use is made of the fact that the position of the button element 6 changes when the position of the on/off switch changes.

It will be clear to a person skilled in the art that the scope of the present invention is not limited to the examples discussed in the foregoing, but that several amendments and modifications thereof are possible without deviating from the scope of the present invention as defined in the attached claims. While the present invention has been illustrated and described in detail in the figures and the description, such illustration and description are to be considered illustrative or exemplary only, and not restrictive. The present invention is not limited to the disclosed embodiments.

For example, various embodiments of the vibratory element 20 are feasible, wherein the vibratory element 20 may even be shaped like a commonly known tune fork.

It is noted that the present invention is applicable in any type of device for heating a fluid which needs to have an arrangement for generating an acoustic signal for indicating a boiling status of the fluid. In case such a device does not comprise an on/off switch and a button element 6 as described in relation to the disclosed embodiments of the present invention, a similar switching device may be incorporated in the device for the purpose of operating the vibratory element 20.

Variations to the disclosed embodiments can be understood and effected by a person skilled in the art in practicing the claimed invention, from a study of the figures, the description and the attached claims. In the claims, the word "comprising" does not exclude other steps or elements, and the indefinite article "a" or "an" does not exclude a plurality. The mere fact that certain measures are recited in mutually different dependent claims does not indicate that a combination of these measures cannot be used to advantage. Any reference signs in the claims should not be construed as limiting the scope of the present invention.

In the foregoing, an electric hot water kettle I having an on/off switch is disclosed. The on/off switch is adapted to automatically switch from a position for closing an electric circuit of the kettle 1 to a position for interrupting the electric circuit when water which is present inside a container 2 of the kettle 1 has been boiling for a while. The on/off switch is manually operable through a movably arranged button element 6, a position of which is determined by the position of the switch in a manner known per se.

In a first embodiment of the hot water kettle 1, inside a space 61 of the button element 6, a vibratory element 20 comprising a flexible bar 21 is arranged. When the on/off switch is in the closed position, a free end 25 of the bar 21 is retained by a hook-shaped end portion 11 of a fixedly arranged actuator 10. As soon as the on/off switch switches to the opened position, the free end 25 of the bar 21 is eventually released by the actuator 10, and a free portion of the bar 21 sways towards an outer wall 62 of the button element 6, as a result of which the vibratory element 20 starts to vibrate and the button element 6 starts to resonate, so that sound is generated.

In a second embodiment of the hot water kettle 1, the vibratory element 20 is connected to an outer wall 41 of a handle 4 of the kettle 1, wherein a rim 63 of the button element 6 is used to activate the vibratory element 20 such as to cause a vibration of this element 20, and wherein a space of the handle 4, which is at least partially hollow, functions as a resonance space.

Within the scope of the present invention as defined by the claims, it is also possible that magnetic forces are applied for retaining and releasing the vibratory element 20. For example, an actuator having an electromagnet may be provided, which is adapted to retain the vibratory member 20 in a position deviating from a normal, relaxed position of the vibratory element 20 when being energized, and to release the vibratory member 20 when being deenergized. Furthermore, it is true that within the scope of the present invention as defined by the claims, any actuator which is adapted to excite the vibratory member 20 and to quickly retract such as not to hinder the vibration of the vibratory element 20 caused by the exciting action of the actuator may be applied. In general, in case an actuator 11 is applied in the device 1 according to the present invention, the actuator 11 may be adapted such as to act on the vibratory member 20 mechanically, magnetically, or otherwise. Furthermore, advantageously, the actuator 11 may be constituted by a component of the device 1 which primarily serves another purpose, so that there is no need for an additional component in the device 1. An example of such component is a button element 6 for operating an on/off switch of the device 1.

## Claims

1. Device (1) for heating a fluid and for indicating a stage of the fluid heating process at which the fluid is boiling, comprising
- an electrical circuit which can be closed for activating the process and can be interrupted for deactivating the process,
- an acoustic member for generating an acoustic signal, which acoustic member comprises a resonance box (4, 6) and a vibratory member (20) which is capable of generating an acoustic vibration and thereby causing the resonance box (4, 6) to resonate, wherein the vibratory member comprises a flexible bar, **characterized in that** the device comprises
- an actuator (6, 10) which is adapted to retain the vibratory member (20) when being in a first position with respect to the vibratory member (20) while the electric circuit is closed, and to release the vibratory member (20) when moving from the first position to a second position with respect to the vibratory member when the electrical circuit is interrupted.

2. Device (1) according to claim 1, wherein the vibratory member (20) is arranged inside the resonance box (4, 6).

3. Device (1) according to claim 1 or 2, wherein the resonance box is formed by a component (4, 6) of the device (1) which has at least one other function than being part of the acoustic member.

4. Device (1) according to any of claims 1-3, wherein the resonance box is constituted by a button element (6) which primarily serves for operating an on/off switch of the device (1).

5. Device (1) according to any of claims 1-3, wherein the resonance box is at least part of a handle (4) of the device (1), which handle (4) is adapted to be taken hold of by a user of the device (1).

6. Device (1) according to claim 1, wherein the actuator (10) comprises a hook-shaped portion (11) for engaging a portion (25) of the vibratory member (20) when the actuator (10) is in the first position with respect to the vibratory member (20).

7. Device (1) according to claim 1, wherein the actuator is constituted by a component (6) of the device (1) which has at least one other function than retaining and releasing the vibratory member (20).

8. Device (1) according to claim 1 or 7, wherein the actuator is constituted by a button element (6) which primarily serves for operating an on/off switch of the device (1).

9. Device (1) according to any of claims 1-6, wherein the vibratory member (20) is connected to a button element (6) which primarily serves for operating an on/off switch of the device (1).

10. Device (1) according to any of claims 1-5, further comprising an actuator having an electromagnet.

## Patentansprüche

1. Einrichtung (1) zum Erhitzen einer Flüssigkeit und zum Anzeigen eines Stadiums des Flüssigkeitserhitzungsvorgangs, bei dem die Flüssigkeit zum Kochen gebracht wird, wobei die Einrichtung umfasst:
- eine elektrische Schaltung, die zum Aktivieren des Vorgangs geschlossen und zum Deaktivieren des Vorgangs unterbrochen werden kann,
- ein akustisches Element zur Erzeugung eines akustischen Signals, wobei das akustische Element eine Resonanzbox (4, 6) und ein Vibrationselement (20) umfasst, das imstande ist, eine akustische Vibration zu erzeugen, und **dadurch** bewirkt, dass die Resonanzbox (4, 6) in Resonanz tritt, wobei das Vibrationselement einen flexiblen Stab umfasst, **dadurch gekennzeichnet, dass** die Einrichtung umfasst:
- einen Aktuator (6, 10), der so eingerichtet ist, dass er, wenn sich dieser, während die elektrische Schaltung geschlossen ist, in einer ersten Position gegenüber dem Vibrationselement (20) befindet, das Vibrationselement (20) hält, und das Vibrationselement (20) freigibt, wenn er, sobald die elektrische Schaltung unterbrochen wird, von der ersten Position gegenüber dem Vibrationselement in eine zweite Position übergeht.

2. Einrichtung (1) nach Anspruch 1, wobei das Vibrationselement (20) im Innern der Resonanzbox (4, 6) angeordnet ist.

3. Einrichtung (1) nach Anspruch 1 oder 2, wobei die Resonanzbox durch eine Komponente (4, 6) der Einrichtung (1) gebildet wird, die mindestens eine andere Funktion, als einen Teil des akustischen Elements darzustellen, aufweist.

4. Einrichtung (1) nach einem der Ansprüche 1-3, wobei die Resonanzbox durch ein Button-Element (6) gebildet wird, das primär dazu dient, einen Ein-/Aus-Schalter der Einrichtung (1) zu betätigen.

5. Einrichtung (1) nach einem der Ansprüche 1-3, wobei die Resonanzbox zumindest Teil eines Griffs (4) der Einrichtung (1) ist, wobei der Griff (4) so ausgebildet ist" dass er von einem Benutzer der Einrichtung (1) erfasst wird.

6. Einrichtung (1) nach Anspruch 1, wobei der Aktuator (10) einen hakenförmigen Abschnitt (11) umfasst, um mit einem Abschnitt (25) des Vibrationselements (20) in Eingriff zu kommen, wenn sich der Aktuator (10) gegenüber dem Vibrationselement (20) in der ersten Position befindet.

7. Einrichtung (1) nach Anspruch 1, wobei der Aktuator durch eine Komponente (6) der Einrichtung (1) gebildet wird, die mindestens eine andere Funktion, als das Vibrationselement (20) zu halten und freizugeben, aufweist.

8. Einrichtung (1) nach Anspruch 1 oder 7, wobei der Aktuator durch ein Button-Element (6) gebildet wird, das primär dazu dient, einen Ein-/Aus-Schalter der Einrichtung (1) zu betätigen.

9. Einrichtung (1) nach einem der Ansprüche 1-6, wobei das Vibrationselement (20) mit einem Button-Element (6) verbunden ist, das primär dazu dient, einen Ein-/Aus-Schalter der Einrichtung (1) zu betätigen.

10. Einrichtung (1) nach einem der Ansprüche 1-5, die weiterhin einen Aktuator mit einem Elektromagneten umfasst.

## Revendications

1. Dispositif (1) destiné à chauffer un fluide et destiné à indiquer un stade du procédé de chauffage de fluide auquel le fluide bout, comprenant
- un circuit électrique qui peut être fermé afin d'activer le procédé et peut être interrompu pour désactiver le procédé,
- un organe acoustique destiné à générer un signal acoustique, lequel organe acoustique comprend une caisse de résonance (4, 6) et un organe vibrant (20) qui est susceptible de générer une vibration acoustique en provoquant de ce fait une résonance de la caisse de résonance (4, 6), dans lequel l'organe vibrant comprend une barre flexible, **caractérisé en ce que** le dispositif comprend
- un actionneur (6, 10) qui est adapté pour retenir l'organe vibrant (20) lorsqu'on se trouve dans une première position par rapport à l'organe vibrant (20) alors que le circuit électrique est fermé, et pour libérer l'organe vibrant (20) lorsqu'on passe de la première position à une deuxième position par rapport à l'organe vibrant lorsque le circuit électrique est interrompu.

2. Dispositif (1) selon la revendication 1, dans lequel l'organe vibrant (20) est disposé à l'intérieur de la caisse de résonance (4, 6).

3. Dispositif (1) selon la revendication 1 ou 2, dans lequel la caisse de résonance est formée par un composant (4, 6) du dispositif (1) qui a au moins une autre fonction que celle de faire partie de l'organe acoustique.

4. Dispositif (1) selon l'une quelconque des revendications 1 à 3, dans lequel la caisse de résonance est constituée d'un élément de bouton (6) qui sert principalement pour actionner un interrupteur marche/arrêt du dispositif (1).

5. Dispositif (1) selon l'une quelconque des revendications 1 à 3, dans lequel la caisse de résonance est au moins une partie d'une poignée (4) du dispositif (1), laquelle poignée (4) est adaptée pour être saisie par un utilisateur du dispositif (1).

6. Dispositif (1) selon la revendication 1, dans lequel l'actionneur (10) comprend une partie en forme de crochet (11) pour amener en prise une partie (25) de l'organe vibrant (20) lorsque l'actionneur (10) est dans la première position par rapport à l'organe vibrant (20).

7. Dispositif (1) selon la revendication 1, dans lequel l'actionneur est constitué d'un composant (6) du dispositif (1) qui a au moins une autre fonction que celle de retenir et de libérer l'organe vibrant (20).

8. Dispositif (1) selon la revendication 1 ou 7, dans lequel l'actionneur est constitué d'un élément de bouton (6) qui sert principalement pour actionner un interrupteur marche/arrêt du dispositif (1).

9. Dispositif (1) selon l'une quelconque des revendications 1 à 6, dans lequel l'organe vibrant (20) est connecté à un élément de bouton (6) qui sert principalement pour actionner un interrupteur marche/arrêt du dispositif (1).

10. Dispositif (1) selon l'une quelconque des revendications 1 à 5, comprenant en outre un actionneur comportant un électro-aimant.
